(19) **Europäisches Patentamt**

**European Patent Office**

**Office européen des brevets**

(11) **EP 1 122 964 A2**

(12) **EUROPEAN PATENT APPLICATION**

(43) Date of publication:
08.08.2001 Bulletin 2001/32

(51) Int Cl.⁷: **H04Q 7/38**

(21) Application number: **01102347.0**

(22) Date of filing: **01.02.2001**

| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **02.02.2000 KR 2000005056**<br>**11.02.2000 KR 2000006361**<br>**24.02.2000 KR 2000009007**<br><br>(71) Applicant: **LG ELECTRONICS INC.**<br>**Seoul (KR)** | (72) Inventors:<br>• **Yi, Seung June**<br>**Seoul (KR)**<br>• **Lee, Young Dae**<br>**Kyonggi-do (KR)**<br>• **Kwon, Sung Lark**<br>**Seoul (KR)**<br><br>(74) Representative:<br>**TER MEER STEINMEISTER & PARTNER GbR**<br>**Patentanwälte,**<br>**Mauerkircherstrasse 45**<br>**81679 München (DE)** |
| --- | --- |

(54) **Method for allocating common packet channels in a CDMA based mobile communication system**

(57) A method for allocating CPCHs in a next generation mobile communication system is disclosed. A mobile station maps a signature for indicating a specific CPCH with scrambling codes and transmits an access preamble including the signature to a system to request allocation of the channel. The system maps a signature of a CA-ICH for a desired CPCH with the scrambling codes to transmit it to the mobile station. The mobile station transmits a message to the system through a corresponding physical channel in accordance with the CA-ICH. The mobile station can transmit a CD-P for preventing channel collision to the system by mapping with a specific scrambling code set. At this time, the system can select a scrambling code from a scrambling code set designated by the CD-P and can map the selected scrambling code with the CA-ICH.

FIG.7A

EP 1 122 964 A2

**Description**

BACKGROUND OF THE INVENTION

Field of the Invention

The present invention relates to a method for allocating common packet channels in a next generation mobile communication system.

Description of the Related Art

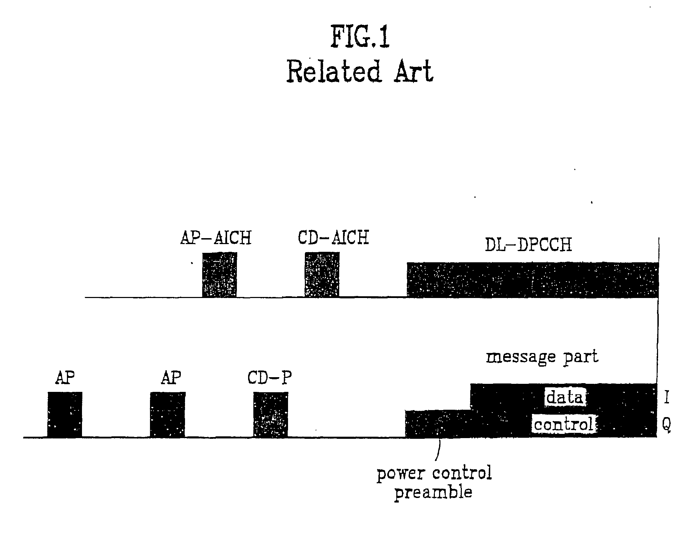

Fig. 1 shows a transmission structure of a related art common packet channel(CPCH). Referring to Fig. 1, a related art CPCH includes a CPCH status indicator channel (CSICH) for transmitting at a base station status information of a CPCH of a current cell, an access preamble (AP) for being transmitted by a mobile station which received the CSICH to request allocation of a specific CPCH, an AP acquisition indicator channel (AP-AICH) for transmitting a response signal of the AP at the base station, a collision detection preamble (CD-P) for detecting collision of the CPCH generated when a plurality of mobile stations request the same CPCH and releasing the collision, a collision detection preamble acquisition indicator channel (CD-AICH) for transmitting a response of the CD-P at the base station, a power control preamble (PC-P) of 0 or 8 slot length for setting transmission power level before transmission of a message part, down link-dedicated physical control channel (DL-DPCCH) for implementing closed loop power control (CL-PC), and a message part for transmitting user packet data. The message part includes a data part and a control part.

A procedure for transmitting the CPCH will be described.

First, a mobile station which desires to transmit packet data identifies a currently available(or non-available) channel referring to a CSICH broadcasting from a base station, and tries to access the base station when a CPCH that can support a desired transmission data rate is vacant.

At this time, the mobile station transmits an AP to the base station to inform a desired CPCH. That is, the mobile station respectively selects an AP signature and an access slot, and transmits an AP consisting of the selected AP signature and access slot to the base station in compliance with a start point of the access slot. The AP signature indicates each CPCH.

Thereafter, the mobile station increases transmission power to retransmit the AP in compliance with the start point of the access slot when an acquisition response of the AP is not received until a constant time. Such retransmission is repeated until the number of threshold times.

The base station receives the AP from the mobile station to sense a maximum data rate or a minimum spreading factor requested by the mobile station. Then, the base station determines whether to allocate a CPCH requested by the mobile station considering a resource of the current CPCH and an amount of total traffic.

Meanwhile, in an optical band code division multiplexing access communication system, since one cell can serve CPCHs of 16 or less, 16 signatures exist. The mobile station selects one of the 16 signatures to transmit it to the base station.

At this time, if a minimum spreading factor $SF_{mim}$ of a CPCH serviced by a cell is below 32, the 16 signatures are mapped with a node having a spreading factor of 16 in a channelization orthogonal variable spreading factor (OVSF) code tree one to one and then transmitted. This means that the 16 APs are respectively mapped with a channelization code of a message part of the CPCH one to one, and respectively indicate 16 CPCHs.

Subsequently, the base station checks whether the CPCH can be allocated. If the CPCH can be allocated, the base station transmits the signature equal to the received AP as an acknowledgement(ACK) signal in compliance with the start point of the access slot. If the CPCH cannot be allocated, the base station transmits an inverted signature of the received AP as a non-acknowledgement(NACK) in compliance with the start point of the access slot.

When a number of mobile stations simultaneously transmit the AP with the same signature, the base station does not identify the mobile stations from the same signature, thereby transmitting the ACK signal to all of mobile stations. Thus, the mobile stations which received the ACK signal transmit a CD-P to the base station to detect collision. Any one of the 16 signatures equal to the AP is used as the CD-P. Likewise, any one of 16 signatures is used as scrambling codes in the same manner as the AP but codes shifted as much as 4096 chips are used as the scrambling codes.

When the base station receives one CD-P, the base station determines that collision has not occurred, and transmits the signature equal to that of the received CD-P to the mobile station through the CD-AICH. However, when the base station receives a number of CD-Ps, the base station determines that collision has occurred, and selects the CD-P having the highest power among the received CD-Ps to transmit the CD-AICH to a corresponding mobile station.

Furthermore, the base station transmits a CA-ICH containing channel information in a signature format to the mobile station. At this time, the channel information contained in the CA-ICH includes a channelization code and a scrambling code of a down link-dedicated physical control channel (DL-DPCCH) and a physical common packet channel (PCPCH). The CD-ICH and the CA-ICH are simultaneously transmitted to the mobile station.

Afterwards, the mobile station which received the CD-AICH and the CA-AICH starts to transmit message. The mobile station controls transmitting power using the PC-P if necessary to start to transmit message consisting of a data part and a control part. Meanwhile, the base station transmits the DL-DPCCH to the mobile station. The mobile station transmits the PC-P for a constant time of 0 or 8 slots through the signature information of the CA-AICH before transmitting the message consisting of the data part and the control part through a physical channel.

Meanwhile, in transmission of the PCPCH, the mobile station uses a code mapped with the signature of the CA-AICH one to one as a scrambling code and also uses a node having a spreading factor of 2C(2.0) on an OVSF code tree against all of CA-AICHs as a channelization code.

In other words, the mobile station uses a node C(256, 0) as a channelization code of the control part in the message part of the PCPCH and a node C(SF, SF/4) variable depending on the spreading factor as a channelization code of the data part.

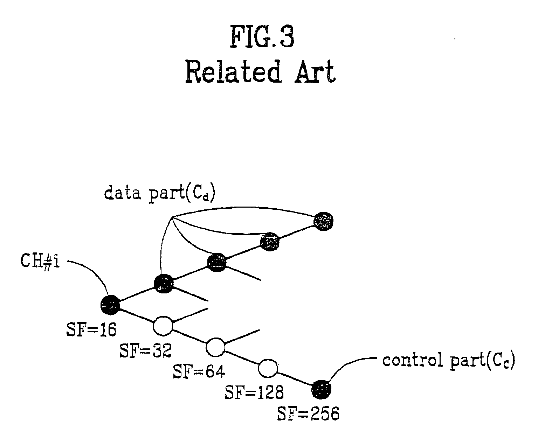

Meanwhile, the signatures of the AP are mapped with the channelization codes of the message part one to one. That is, as shown in Fig. 3, if the minimum spreading factor $SF_{min}$ of the data part is 32, in the OVSF code tree, the AP selects one of codes having spreading factors of 32~256 in an up branch direction from the node having a spreading factor of 16 as a channelization code $C_d$ of the data part to map therewith, and selects a code located last in a down branch, i.e., a code having a spreading factor of 256 as a channelization code $C_c$ to map therewith. A gold code, an M-sequence and a Kasami code may be used as a scrambling code of the message part.

Therefore, when the base station receives the message part mapped as above, the base station decodes the control part using the channelization code $C_c$ determined by the AP signature. Since the data part corresponds to one of spreading factors 32~256, the base station partially codes an OVSF code having a spreading factor of 16 and then decodes the control part. The base station detects an exact spreading factor of the data part to decode the data part.

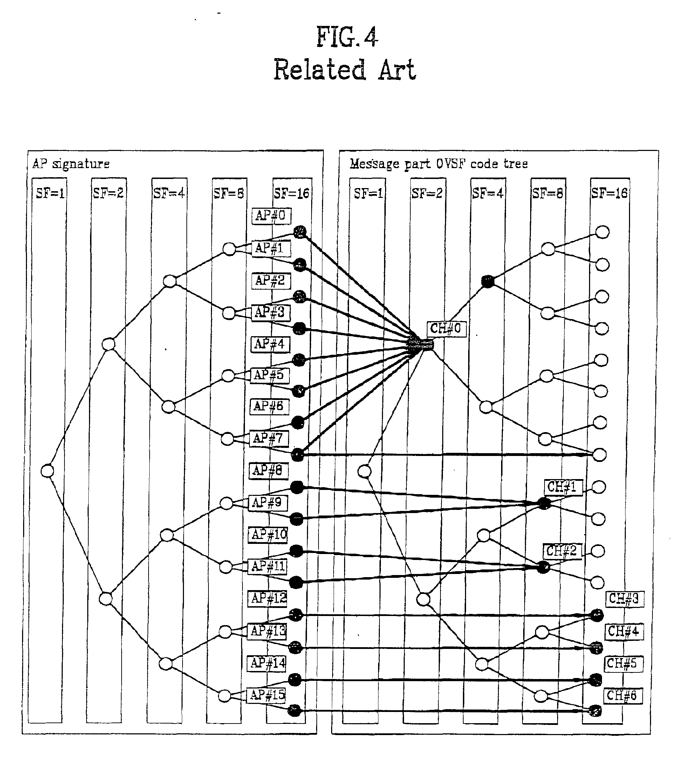

Meanwhile, if the spreading factor serviced by the cell is below 16, i.e., if the minimum spreading factor $SF_{min}$ is 4, 8, and 16, the AP signature is not mapped with the channelization code of the message part one to one. Accordingly, as shown in Fig. 4, a fixed channel structure is used.

Fig. 4 shows a mapping structure between the AP signature and the CPCH when a related art spreading factor is 4.

Referring to Fig. 4, if the minimum spreading factor $SF_{min}$ of the CPCH serviced by the cell is 4, 8, and 16, a specific AP is fixed to indicate a specific channel.

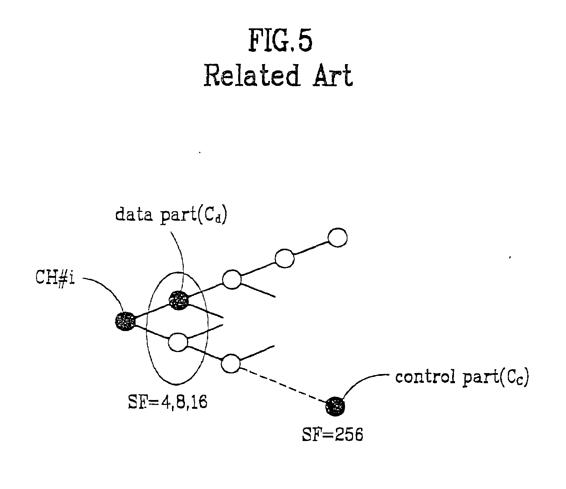

That is, AP#0 ~ AP#7 of the 16 APs indicate CH#0, AP#8 ~ AP#9 indicate CH#1, AP#10 ~ AP#11 indicate CH#2, and AP#12 ~ AP#15 respectively indicate CH#3 ~ CH#6. At this time, in CH#0 ~ CH#2, the channelization code $C_d$ of the data part is determined as one of codes of the next node as shown in Fig. 5. The channelization code $C_c$ of the control part is determined as a code located last in a down branch direction, i.e., a code having a spreading factor of 256. At this time, since the minimum spreading factor $SF_{min}$ is below 32 in CH#3 ~ CH#6, partial coding is performed in a spreading factor of 16 as described above. In this fixed channel structure, CSICH denotes a status of CH#0 ~ CF#6.

Accordingly, when a specific mobile station desires to transmit data having a spreading factor of 4, one of AP#0 ~ AP#7 corresponding to CH#0 is selected as the signature of the AP. When a specific mobile station desires to transmit data having a spreading factor below 32, one of AP#12 ~ AP#15 is selected.

The aforementioned related art has several problems.

First, since 16 signatures of the CA-ICH are used in the related art CPCH, PCPCHs more than 16 cannot be allocated with the CA-ICH. In this case, when considering that the next generation mobile communication system should support 64 maximum PCPCHs per one cell for low rate data service, a method for allocating a CPCH is required to more efficiently use a channel resource.

Second, in the related art method for allocating a CPCH, a mapping method between a signature of the CA-ICH for channel allocation and an OVSF code which is a channelization code of the CPCH has not been suggested. Accordingly, the channel resource is not efficiently used. For this reason, a mapping method between the signature of the CA-ICH and the OVSF code is required.

Third, in a related art transmission structure of a CPCH, particularly, in case of AP, the CPCH has a data rate of 960~15kbps and thus a spreading factor is variable at 4 ~ 256. In this respect, there are several problems.

First, the signature of the AP in access step of the mobile station is mapped with 16 nodes having a spreading factor of 16 on the OVSF code tree. Accordingly, no problems occur in transmitting the data having a spreading factor below 32. However, in transmitting data having a spreading factor of 4, 8 and 16, one to one mapping between the signature of the AP and the node is not performed. In this case, a fixed channel structure is required. Accordingly, to use data rate of 4 in the fixed channel structure, the specific mobile station should select one of 8 signatures not 16 signatures. This increases the probability of collision of the CPCH in the access step. At this time, if data having a spreading factor of 32 or less is transmitted, as shown in Fig. 4, AP of one of AP#12 ~ AP#15 should be selected.

This also results in that the probability of collision of the CPCH increases in the access step.

Next, if the specific mobile station uses CH#0 having a spreading factor of 4, AP#4 ~ AP#6 can be used for data transmission having a spreading factor of 32 or less. However, in the fixed channel structure, the APs remain vacant. This causes a problem that the channel resource is efficiently not used.

Finally, since different spreading factors are supported to the respective AP signatures, a separate mapping table between the AP signature and the spreading factor is required. Also, since the system should periodically broadcast the mapping table information to the mobile station through a broadcasting channel BCH, problems arise in that the capacity of the system increases and interference increases.

## SUMMARY OF THE INVENTION

Accordingly, the present invention is directed to a method for allocating CPCHs in a next generation mobile communication system that substantially obviates one or more of the problems due to limitations and disadvantages of the related art.

An object of the present invention is to provide a method for allocating CPCHs in a next generation mobile communication system, in which a channel resource can efficiently be used.

Another object of the present invention is to provide a method for allocating CPCHs in a next generation mobile communication system, in which variable spreading factors can be served.

Other object of the present invention is to provide a method for allocating CPCHs in a next generation mobile communication system which can support 16 or more CPCHs for low data rate service in a base station.

Additional features and advantages of the invention will be set forth in the description which follows, and in part will be apparent from the description, or may be learned by practice of the invention. The objectives and other advantages of the invention will be realized and attained by the scheme particularly pointed out in the written description and claims hereof as well as the appended drawings.

To achieve these and other advantages and in accordance with the purpose of the present invention, the set of scrambling codes used for the PCPCH message part have one-to-one correspondence to the signature sequences and the access sub-channels used by the access preamble part. Both long or short scrambling codes can be used to scramble the CPCH message part.

In accordance with the purpose of the present invention, as embodied and broadly described, a method for allocating CPCHs in a next generation mobile communication system according to the present invention includes the steps of transmitting status information of the CPCHs from a system to a mobile station, mapping a signature for indicating a specific CPCH to be used in accordance with the status information with a scrambling code, and transmitting an AP with the signature to the system to request allocation of the CPCH.

The mobile station can map respective signatures of the CPCHs that can be serviced by the system with different scrambling codes. Also, the mobile station divides a specific scrambling code into chip codes of a predetermined length, and the signatures of the CPCHs can be mapped with the divided scrambling chip codes.

In another aspect of the present invention, the mobile station receives status information of a CPCH from a system, and tries access to the system for use of the CPCH in accordance with the received status information. The system then maps signatures of a CA-ICH for the CPCH to be allocated with scrambling codes, and the mobile station transmits a message to a corresponding physical channel in accordance with the CA-ICH.

The mobile station can map respective signatures of the CA-ICH with different scrambling codes for the CPCH to be allocated. Also, the system divides a specific scrambling code into chip codes of a predetermined length, and the respective signatures of the CA-ICH can be mapped with the divided scrambling chip codes.

The mobile station can select one of codes located in an up branch from a node having a spreading factor of 2 in a code tree of the scrambling codes as a channelization code of a data part and can select a code last located in a down branch as a channelization code of a control part. Also, the mobile station can select a code last located among codes in an up branch from a node having a spreading factor of 2 as a channelization code of the control part, and can select one of codes in an up branch among branches of a code located in a lower code of the node as a channelization code of the data part.

In another aspect of the present invention, a method for allocating CPCHs includes the steps of transmitting a maximum data rate and a minimum spreading factor of a desired channel from a mobile station to a system to request allocation of the channel, determining at the system whether allocation of the requested channel is available and responding to the mobile station, mapping a CD-P for preventing channel collision with a specific scrambling code set and transmitting the CD-P from the mobile station to the system, selecting at the system a scrambling code from the scrambling code set designated by the transmitted CD-P, mapping the selected scrambling code with a CA-ICH, and transmitting a message from the mobile station to the system using a scrambling code designated by the transmitted CA-ICH.

When transmitting the CD-P, one signature of the CD-P is mapped with one scrambling code set one to one in accordance with the number of available scrambling code sets, or a plurality of signatures are mapped to indicate a specific scrambling code set.

It is to be understood that both the foregoing general description and the following detailed description are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this specification, illustrate an embodiment of the invention and together with the description serve to explain the principles of the invention.

In the drawings:

Fig. 1 shows a related art transmission structure of a CPCH;

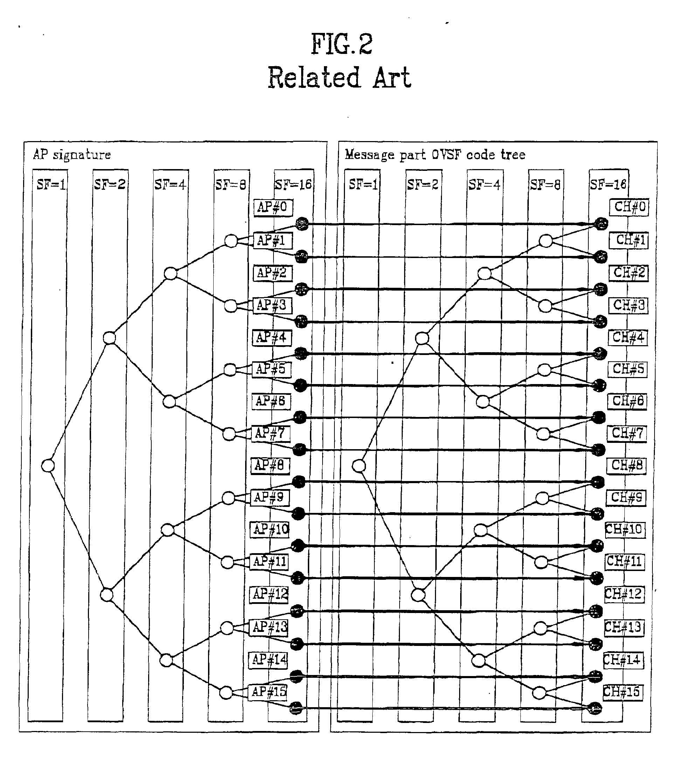

Fig. 2 shows a related art mapping structure between AP signatures and the CPCH when a spreading factor is 32;

Fig. 3 shows a related art method for determining a channelization code of a message part of the CPCH when a spreading factor is 32;

Fig. 4 shows a related art mapping structure between AP signatures and the CPCH when a spreading factor is 4;

Fig. 5 shows a related art method for determining a channelization code of a message part of the CPCH when a spreading factor is 4, 8, and 16;

Fig. 6 shows an example of a mapping structure between AP signatures and scrambling codes according to the first embodiment of the present invention;

Figs. 7a and 7b show a method for determining a channelization code of a message part of the CPCH according to the first embodiment of the present invention;

Fig. 8 shows another example of a mapping structure between AP signatures and scrambling codes according to the first embodiment of the present invention;

Fig. 9 shows other example of a mapping structure between AP signatures and scrambling codes according to the first embodiment of the present invention;

Fig. 10 shows an example of a mapping structure between CA-ICH signatures and scrambling codes according to the second embodiment of the present invention;

Figs. 11a and 11b show a method for determining a channelization code of a message part according to the second embodiment of the present invention;

Fig. 12 shows another example of a mapping structure between CA-ICH signatures and scrambling codes according to the second embodiment of the present invention;

Fig. 13 shows other example of a mapping structure between CA-ICH signatures and scrambling codes according to the second embodiment of the present invention;

Fig. 14 shows an example of a mapping method between a CD-P and a CA-ICH according to the third embodiment of the present invention; and

Fig. 15 shows another example of a mapping method between a CD-P and a CA-ICH according to the third embodiment of the present invention.

## DETAILED DESCRIPTION OF THE PREFERRED EMBODIMENTS

Reference will now be made in detail to the preferred embodiments of the present invention, examples of which are illustrated in the accompanying drawings.

There are 64 uplink scrambling codes defined per cell and 32768 different PCPCH scrambling codes defined in the system.

The $n$:th PCPCH message part scrambling code, denoted $S_{c\text{-}msg,,n}$, where $n = 8192, 8193, ..., 40959$ is based on the scrambling sequence and is defined as:

In the case when the long scrambling codes are used:

$$S_{c\text{-}msg,n}(i) = C_{long,n}(i),\ i = 0, 1, ..., 38399$$

where the lowest index corresponds to the chip transmitted first in time and $C_{long,n}$ is defined in section 4.3.2.2. In the case the short scrambling codes are used:

$$S_{\text{c-msg,n}}(i) = C_{\text{short,n}}(i),\ i = 0, 1, ..., 38399$$

The 32768 PCPCH scrambling codes are divided into 512 groups with 64 codes in each group. There is a one-to-one correspondence between the group of PCPCH preamble scrambling codes in a cell and the primary scrambling code used in the downlink of the cell. The $k$:th PCPCH scrambling code within the cell with downlink primary scrambling code $m$, $k$ =16,17,..., 79 and m = 0, 1, 2, ..., 511, is $S_{\text{c-msg, n}}$ as defined above with $n = 64 \times m + k + 8176$.

### *First Embodiment

In the first embodiment of the present invention, a channel resource is efficiently used, and a mapping method between AP signatures and a CPCH is suggested to serve all data rates.

To this end, in the present invention, AP signatures are mapped with scrambling codes of a message part, and three types of mapping methods are suggested. Also, two methods for selecting data of a message part and a channelization code of a control part are suggested when the AP signatures are mapped with the scrambling codes.

The above three types of mapping methods will be described in more detail.

### First Mapping Method

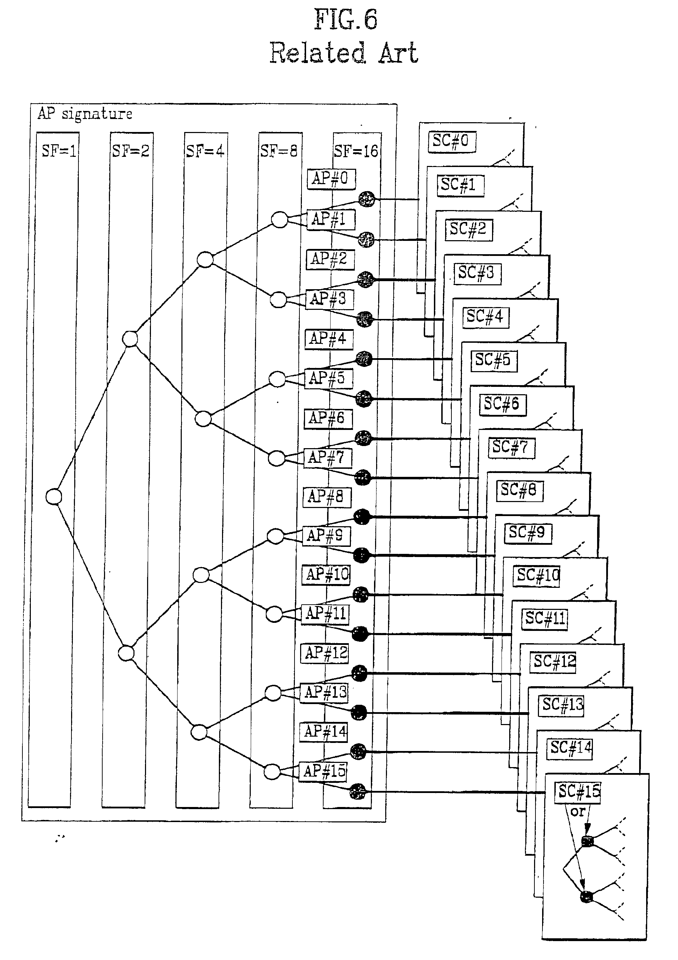

Fig. 6 shows an example of a mapping structure between AP signatures and scrambling codes according to the first mapping method of the present invention.

In the first mapping method, different scrambling codes SC#i are mapped with each AP signature AP#i.

Referring to Fig. 6, 16 AP signatures are mapped with different scrambling codes one to one.

That is, AP signatures of AP#0 $\sim$ AP#15 are mapped to indicate scrambling codes SC#0 $\sim$ SC#15 of the message part. At this time, since the scrambling codes SC#0 $\sim$ SC#15 are different scrambling codes, 16 scrambling codes are additionally required in the present invention. However, the number of the scrambling codes is $2^{25}$-1, deficiency of the codes does not occur.

As described above, if AP signatures are mapped with the scrambling codes, 16 scrambling codes are different from one another. The respective scrambling codes SC#i has a channelization OVSF code tree. Accordingly, the channelization code of a data part and a control part in a message part is selected in the channelization OVSF code tree of the respective scrambling code.

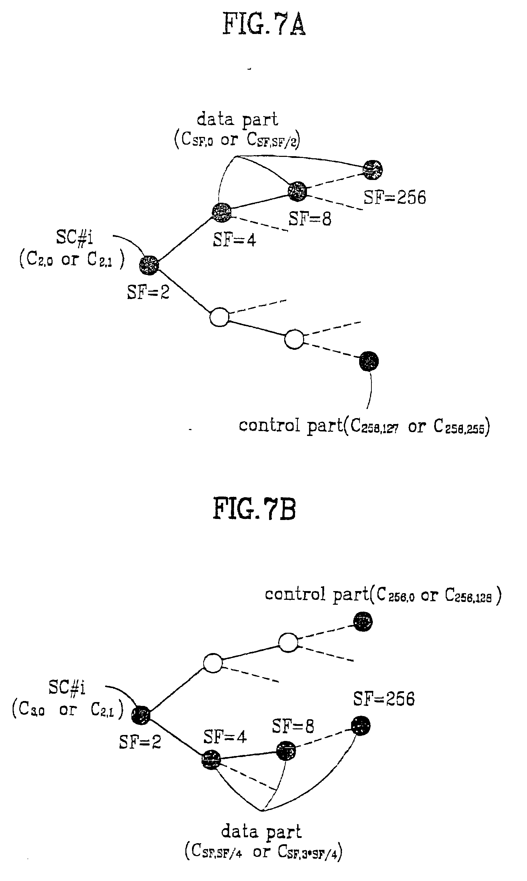

At this time, as shown in Figs. 7a and 7b, two methods are used as a method for selecting the channelization code.

Referring to Fig. 7a, in an OVSF code tree of each scrambling code, one of codes having spreading factors 4 $\sim$ 256 in a direction of an up branch $C_{SF,0}$ or $C_{SF,SF/2}$ from a node $C_{2,0}$ or $C_{2,1}$ having a spreading factor of 2 is selected as a channelization code Cd of the data part while a code $C_{256,127}$ or $C_{256,255}$ last located in a direction of a down branch, i.e., a code having a spreading factor of 256 is selected as a channelization code $C_c$ of the control part. Referring to Fig. 7b, a code $C_{256,0}$ or $C_{256,128}$ last located in a direction of an up branch from a node having a spreading factor of 2 is selected as a channelization code $C_c$ of the control part while a lower node of two nodes having a spreading factor of 4 generated from a node having a spreading factor of 2 is selected and one of codes having spreading factors 4 $\sim$ 256 in a direction of an up branch $C_{SF,SF/4}$, $C_{SF,3}{}^*{}_{SF/4}$ of the selected node is selected as a channelization code $C_d$ of the data part.

### Second Mapping Method

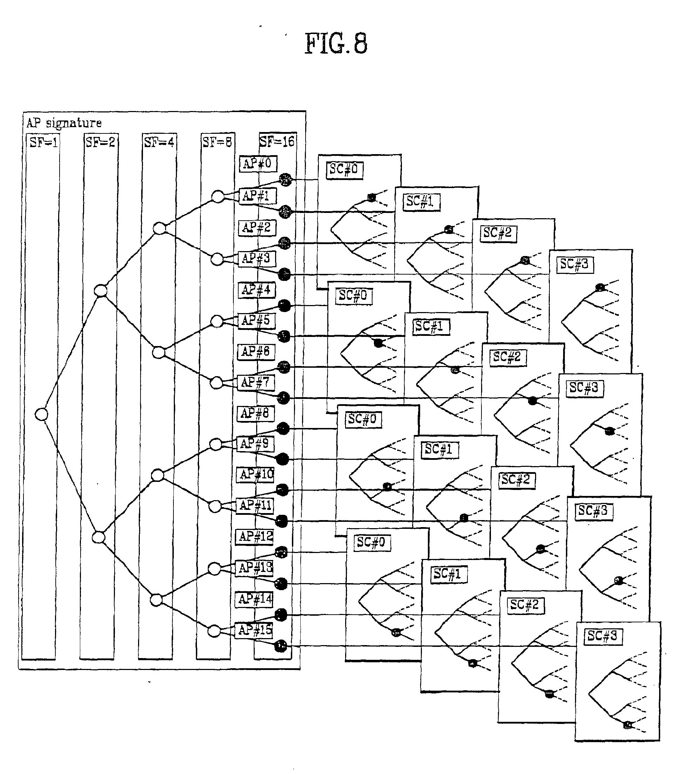

Fig. 8 shows an example of a mapping structure between AP signatures and scrambling codes according to the second mapping method of the present invention.

In the second mapping method, different AP signatures use one scrambling code in common. Particularly, the second mapping method considers a minimum spreading factor $SF_{min}$ of a CPCH that can be serviced by a cell. In Fig. 8, it is assumed that the minimum spreading factor $SF_{min}$ is 8.

Referring to Fig. 8, in the second mapping method, the number of scrambling codes mapped with the AP signatures is determined depending on the minimum spreading factor $SF_{min}$ that can be serviced by the cell. That is, the number of the scrambling codes is determined by the following equation (1).

$$\text{The number of scrambling codes} = \boxed{\times} \qquad \dots\dots(1)$$

In more detail, one OVSF code tree has two nodes having a spreading factor of 2. That is, the nodes are $C_{2,0}$ and $C_{2,1}$. Therefore, considering that the spreading factors used in the CPCH are 4 ~ 256, two scrambling codes can use one OVSF code tree in common.

For example, if AP#0 ~ AP#7 are mapped to indicate the node $C_{2,0}$ of SC#0 ~ SC#7, and AP#8 ~ AP#15 are mapped to indicate the node $C_{2,1}$, 16 AP signatures can respectively be mapped with total 8 scrambling codes.

Therefore, if the minimum spreading factor $SF_{min}$ supported by the cell is greater than 4, the scrambling codes smaller than 8 can be used in accordance with the minimum spreading factor $SF_{min}$.

In Fig. 8, since the minimum spreading factor $SF_{min}$ is 8, the number of the required scrambling codes is 4 by means of the equation (1). Accordingly, in Fig. 8, 16 AP signatures are mapped with 4 scrambling codes.

At this time, since the number of nodes having a spreading factor of 4 in divided scrambling codes SC#0, SC#1, SC#2, and SC#3 is 4, AP#0, AP#4, AP#8, and AP#12 are mapped with each node of SC#0, AP#1, AP#5, AP#9, and AP#13 are mapped with each node of SC#1, and AP#3, AP#7, AP#11, and AP#15 are mapped with each node of SC#3.

In this way, if the minimum spreading factor $SF_{min}$ is 16, two scrambling codes are used by the equation 1. 16 AP signatures are respectively mapped with 8 nodes having a spreading factor of 8 in two scrambling codes as described above.

Finally, if the minimum spreading factor $SF_{min}$ is below 32, one scrambling code is only used.

In the aforementioned second mapping method, the channelization code of the message part can be selected in accordance with two methods described in the first mapping method.

Third Mapping Method

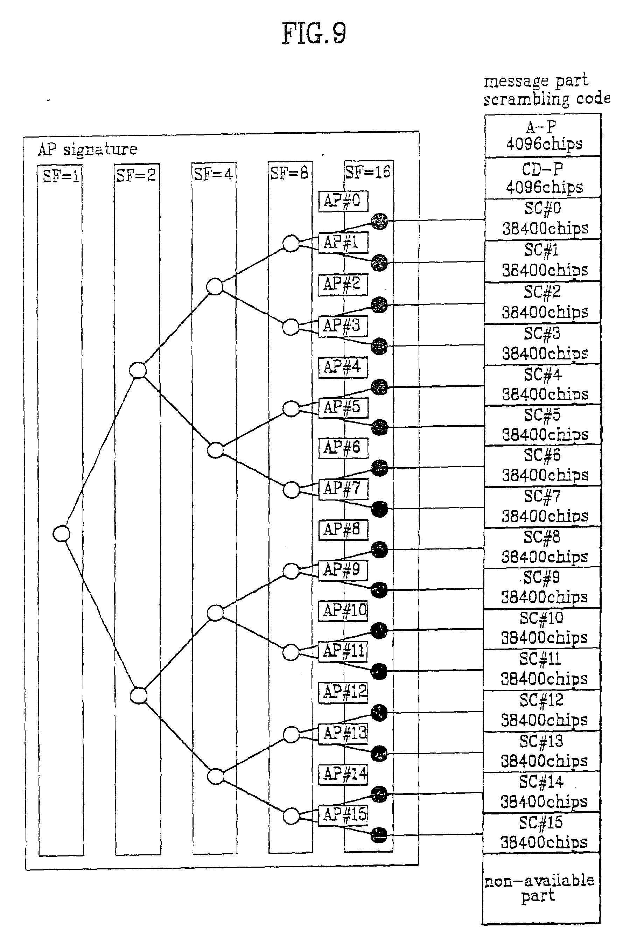

Fig. 9 shows an example of a mapping structure between AP signatures and scrambling codes according to the third mapping method of the present invention.

In the third mapping method, one scrambling code is divided into a plurality of chip codes to map with each AP signature.

Referring to Fig. 9, each scrambling code used in an up link in a wide band code division multiplexing communication system is a long code and has $2^{25-1}$ chip codes. Each scrambling code has a chip length of $2^{25-1}=33554431$.

However, since the message part of the CPCH has a length of 38400 N, 38400 chips are only required as a scrambling code of the message part. Thus, one scrambling code is divided into a number of codes.

At this time, the divided scrambling codes are different from each other, the same result as the first mapping method for allocating different scrambling codes occurs.

Since the message part has 4096 chips in an AP portion a CD-P portion, one scrambling code s a portion other than the AP portion and the CD-P portion into codes having 38400 chips. The divided scrambling codes are mapped with each AP signature. Accordingly, the 16 AP signatures can sufficiently be mapped with one scrambling code.

Also, if one scrambling code is divided into codes having 38400 chips, the divided chip scrambling codes SC#i respectively have an OVSF code tree. Accordingly, the number of codes mapped with the AP signatures can be controlled depending on the minimum spreading factor $SF_{min}$ within the cell in the same manner as the second mapping method. That is, if the minimum spreading factor $SF_{min}$ is 8, 4 chip scrambling codes among the divided chip scrambling codes are mapped with the 16 AP signatures.

In the aforementioned third mapping method, the channelization code of the message part is selected by the two methods described in the first mapping method.

Now, a transmission structure of the CPCH to which the mapping methods according to the first embodiment are applied will be described.

A mobile station which desires to transmit packet data identifies a currently available(or non-available) channel referring to a CSICH broadcasting from a base station, and tries to access the base station when a CPCH that can support a desired transmission data rate is vacant.

At this time, the mobile station transmits an AP to the base station to inform a desired CPCH. The AP consists of signatures, and each signature indicates each CPCH.

Each AP signature is mapped with the scrambling codes of the message part in each CPCH. As described in the first mapping method to the third mapping method, each AP signature is mapped with different scrambling codes or one scrambling code divided to codes with a predetermined chip interval. At this time, the number of the scrambling codes can be controlled depending on the minimum spreading factor $SF_{min}$ that can be supported by the cell.

A channelization code of the message part is selected from the channelization OVSF code tree of a corresponding scrambling code by the aforementioned two methods.

Subsequently, the base station receives the AP from the mobile station to check whether each CPCH can be used. If each CPCH can be used, the base station transmits a signature equal to the received AP to the mobile station as an ACK signal. If each CPCH cannot be used, the base station transmits an inverted signature of the received AP to the mobile station as a non-acknowledgement(NACK).

When a number of mobile stations simultaneously transmit the AP with the same signature to the base station, the base station does not identify the mobile stations from the same signature, thereby transmitting the ACK signal to all of the mobile stations. Thus, the mobile stations which received the ACK signal transmit a CD-P to the base station to detect collision. Any one of the 16 signatures equal to the AP is used as the CD-P. In the same manner as the AP, codes shifted as much as 4096 chips are used as the scrambling codes.

When the base station receives one CD-P, the base station determines that collision has not occurred, and transmits the signature equal to that of the received CD-P to the mobile station through the CD-AICH. However, when the base station receives a number of CD-Ps, the base station determines that collision has occurred, and selects the CD-P having the highest power among the received CD-Ps to transmit the CD-AICH to a corresponding mobile station.

Afterwards, the mobile station which received the CD-AICH starts to transmit a message to the base station. The mobile station uses the scrambling codes mapped with the AP signatures to transmit the message, and selects the channelization code to be used in the data part and the control part of the message using one of the two methods shown in Figs. 7a and 7b.

**\*Second Embodiment**

In the second embodiment of the present invention, to efficiently use a channel resource, new mapping methods between CA-AICH signatures and an OVSF code are suggested.

To this end, in the second embodiment of the present invention, the base station maps the CA-AICH signatures with scrambling codes of the message part, and four types of mapping methods are suggested. Also, two methods for selecting a channelization code in a message part and a control part in the message are suggested when base station maps the signatures with the scrambling codes.

The above four types of mapping methods and two methods for selecting a channelization code will be described in more detail.

First Mapping Method

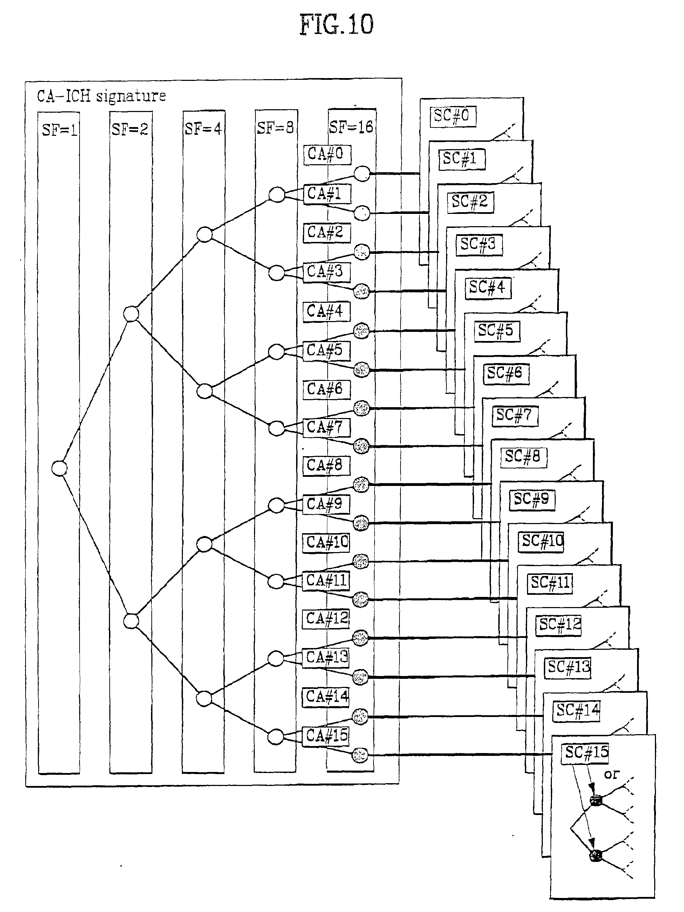

Fig. 10 shows an example of a mapping structure between the CA-AICH signatures and scrambling codes according to the first mapping method of the second embodiment of the present invention.

In the first mapping method of the second embodiment, different scrambling codes SC#i are mapped with each of 16 CA-AICH signatures CA#i.

Referring to Fig. 10, the 16 CA-AICH signatures are mapped with different scrambling codes one to one.

That is, CA-AICH signatures of CA#0 ~ CA#15 are mapped to indicate scrambling codes SC#0 ~ SC#15 of the message part. At this time, since the scrambling codes SC#0 $\sim$ SC#15 are different scrambling codes, 16 scrambling codes are additionally required in the present invention. However, the number of the scrambling codes is $2^{25}-1$, deficiency of the codes does not occur.

As described above, if the CA-AICH signatures are mapped with the scrambling codes, the 16 scrambling codes are different from one another. In this case, the respective scrambling codes SC#i respectively have a channelization OVSF code tree. Accordingly, the channelization code of the data part and the control part in the message part is selected in the channelization OVSF code tree of the respective scrambling code.

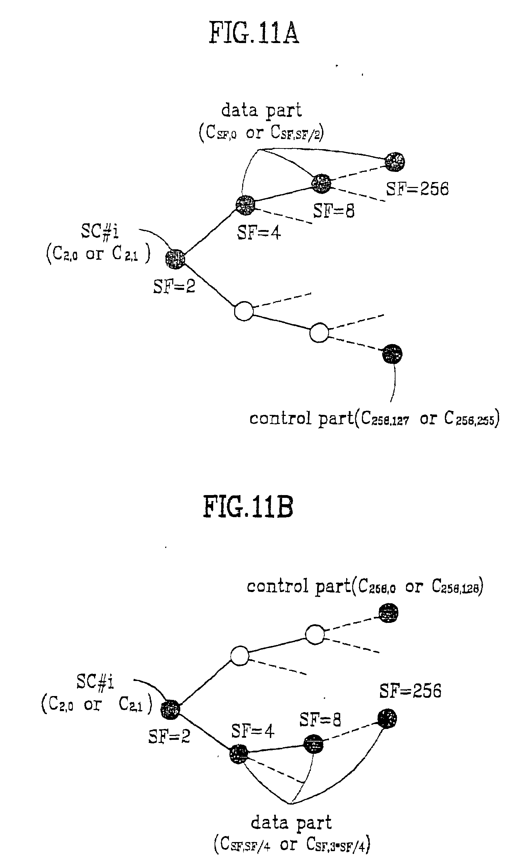

At this time, as shown in Figs. 11a and 11b, two methods are used as a method for selecting the channelization code.

Referring to Fig. lla, in the OVSF code tree, one of codes having spreading factors 4 $\sim$ 256 in a direction of an up branch $C_{SF,0}$ or $C_{SF,SF/2}$ from a node $C_{2,0}$ or $C_{2,1}$ having a spreading factor of 2 is selected as a channelization code $C_d$ of the data part while a code $C_{256,127}$ or $C_{256,255}$ last located in a direction of a down branch, i.e., a code having a spreading factor of 256 is selected as a channelization code $C_c$ of the control part.

Referring to Fig. 11b, a code $C_{256,0}$ or $C_{256,128}$ last located in a direction of an up branch from a node having a spreading factor of 2 is selected as a channelization code $C_c$ of the control part while a lower node of two nodes having a spreading factor of 4 generated from a node having a spreading factor of 2 is selected and one $C_{SF,SF/4}$, $C_{SF,3*SF/4}$ of codes having spreading factors 4 $\sim$ 256 in a direction of the up branch from the selected lower node is selected as a channelization code $C_d$ of the data part.

Second Mapping Method

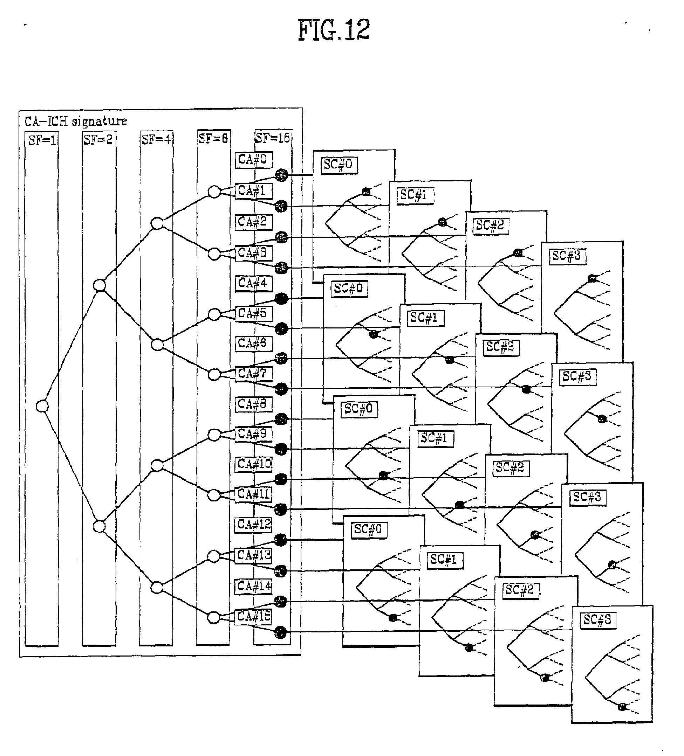

Fig. 12 shows an example of a mapping structure between the CA-AICH signatures and scrambling codes according to the second mapping method of the second embodiment of the present invention.
In the second mapping method, the CA-ICH signatures use one scrambling code in common. Particularly, the second mapping method considers a minimum spreading factor $SF_{min}$ of a CPCH that can be serviced by a cell. In Fig. 12, it is assumed that the minimum spreading factor $SF_{min}$ is 8.
Referring to Fig. 12, in the second mapping method, the number of scrambling codes mapped with the CA-AICH signatures is determined depending on the minimum spreading factor $SF_{min}$ that can be serviced by the cell. That is, the number of the scrambling codes is determined by the following equation (2).

$$\text{The number of scrambling codes} = \boxed{\times} \qquad \dots\dots(2)$$

In more detail, one OVSF code tree has two nodes having a spreading factor of 2. That is, the nodes are $C_{2,0}$ and $C_{2,1}$. Therefore, considering that the spreading factors used in the CPCH are 4 ~ 256, two scrambling codes can use one OVSF code tree in common.
For example, in Fig. 12, if CA#0 ~ CA#7 are mapped to indicate the node $C_{2,0}$ of SC#0 ~ SC#7, and CA#8 ~ CA#15 are mapped to indicate the node $C_{2,1}$, the 16 CA-ICH signatures can respectively be mapped with total 8 scrambling codes.
Therefore, if the minimum spreading factor $SF_{min}$ supported by the cell is greater than 4, the scrambling codes smaller than 8 can be used in accordance with the minimum spreading factor $SF_{min}$.
In Fig. 12, since the minimum spreading factor $SF_{min}$ is 8, the number of the required scrambling codes is 4 by means of the equation (2). Accordingly, in Fig. 12, the 16 CA-ICH signatures are mapped with 4 scrambling codes.
At this time, since the number of nodes having a spreading factor of 4 in divided scrambling codes SC#0, SC#1, SC#2, and SC#3 is 4, CA#0, CA#4, CA#8, and CA#12 are mapped with each node of SC#0, CA#1, CA#5, CA#9, and CA#13 are mapped with each node of SC#1, and CA#3, CA#7, CA#11, and CA#15 are mapped with each node of SC#3.
In this way, if the minimum spreading factor $SF_{min}$ is 16, two scrambling codes are used by the equation (2). The 16 CA-ICH signatures are respectively mapped with 8 nodes having a spreading factor of 8 in two scrambling codes as described above.
Finally, if the minimum spreading factor $SF_{min}$ is below 32, one scrambling code is only used.
In the aforementioned second mapping method, the channelization code of the message part can be selected by two methods described in the first mapping method.

Third Mapping Method

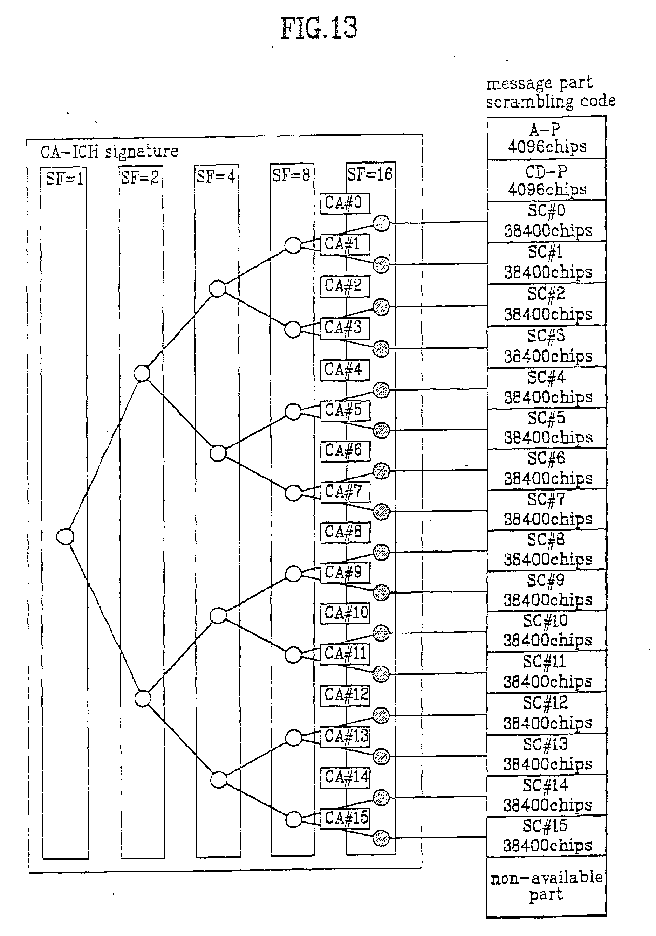

Fig. 13 shows an example of a mapping structure between CA-ICH signatures and scrambling codes according to the third mapping method of the second embodiment of the present invention.
In the third mapping method, one scrambling code is divided into a plurality of codes to map with each CA-ICH signature.
Referring to Fig. 13, each scrambling code used in an up link in a wide band code division multiplexing communication system has $2^{25-1}$ codes as long codes. Each scrambling code has a length corresponding to $2^{25-1}=33554431$ chips.
However, since the message part of the CPCH has a length of 38400 N, chips having a length of 38400 are only required as scrambling codes for the message part. Thus, one scrambling code is divided into a number of codes.
At this time, the divided scrambling chip codes are different from one another, the same result as the first mapping method or the second mapping method for allocating 8 different scrambling codes to the signatures occurs.
Since the message part has a chip length of 4096 in an AP portion a CD-P portion, one scrambling code divides a portion other than the AP portion and the CD-P portion into codes having a chip length of 38400. The divided scrambling chip codes are mapped with the CA-AICH signatures. Accordingly, the 16 CA-ICH signatures can be mapped with one scrambling code only.
Also, if one scrambling code is divided into codes having 38400 chips, the divided chip scrambling codes SC#i respectively have an OVSF code tree. Accordingly, the number of codes mapped with the CA-ICH signatures can be controlled depending on the minimum spreading factor $SF_{min}$ within the cell in the same manner as the second mapping method. That is, if the minimum spreading factor $SF_{min}$ is 8, 4 chip scrambling codes among the divided chip scrambling codes are mapped with the 16 CA-AICH signatures.

In the aforementioned third mapping method, the channelization code of the message part is selected by the two methods described in the first mapping method.

Fourth Mapping Method

In the fourth mapping method, when 16 or more CPCHs are allocated, a mapping method between the CA-AICH signatures and the scrambling codes is suggested.

First, the base station respectively designates the CPCHs and the scrambling codes in a predetermined number of groups. Then, the base station broadcasts information of the groups to the mobile station through the CSICH.

After the mobile station acquires group information of the CPCHs through the CSICH, the mobile station informs the base station of a group belonging to a desired CPCH through the AP. At this time, the mobile station also informs the base station of a desired maximum transmission rate through the AP.

Then, the base station maps the CA-AICH of the CPCH included in a group designated by the AP with the scrambling codes of a corresponding group and then transmits the mapped CA-AICH to the mobile station.

At this time, a mapping method between the CA-AICH and the scrambling codes is identical to the first mapping method to the third mapping method. Accordingly, one CPCH group includes 16 or 8 scrambling codes. If the number of the scrambling codes is small, one CPCH group may include scrambling codes less than 16 or 8.

As described above, when the CPCHs are designated in groups and thus the scrambling codes to be mapped with the CA-AICH signatures are divided into the groups, the AP transmitted by the mobile station designates each group as shown in Table 1 to Table 3.

Table 1

| AP signature numbers | CPCH groups |
|---|---|
| AP#0 ~ AP#i | SC#0 ~ SC#15 |
| AP#(i+1) ~ AP#j | SC#16 ~ SC#31 |
| AP#(j+1) ~ AP#15 | SC#32 ~ SC#47 |

Table 1 shows an example when the first mapping method is applied.

In Table 1, each group includes 16 scrambling codes, and AP of the mobile station designates one group. The CA-ICH signatures of the CPCH belonging to each group are respectively mapped with 16 scrambling codes of a corresponding group.

Table 2

| AP signature numbers | CPCH groups |
|---|---|
| AP#0 ~ AP#i | nodes $C_{2,0}$ and $C_{2,1}$ of SC#0 ~ SC#15 |
| AP# (i+1) ~ AP#j | nodes $C_{2,0}$ and $C_{2,1}$ of SC#8 ~ SC#15 |
| AP# (j+1) ~ AP#k | nodes $C_{2,0}$ and $C_{2,1}$ of SC#16 ~ SC#23 |
| AP# (k+1) ~ AP#15 | nodes $C_{2,0}$ and $C_{2,1}$ of SC#24 ~ SC#31 |

Table 2 shows an example when the second mapping method is applied. In Table 2, one group includes 8 scrambling codes, and AP of the mobile station designates one group. The CA-ICH signatures of the CPCH belonging to each group are respectively mapped with the nodes $C_{2,0}$ and $C_{2,1}$ of 8 scrambling codes of a corresponding group.

Table 3

| AP signature numbers | CPCH groups |
|---|---|
| AP#0 ~ AP#i | node $C_{2,0}$ of SC#0 ~ SC#15 |
| AP#(i+1) ~ AP#j | node $C_{2,0}$ of SC#16 ~ SC#31 |
| AP# (j+1) ~ AP#k | node $C_{2,0}$ of SC#0 ~ SC#15 |

Table 3 (continued)

| AP signature numbers | CPCH groups |
| --- | --- |
| AP# (k+1) $\sim$ AP#15 | node $C_{2,0}$ of SC#16 $\sim$ SC#31 |

Table 3 shows another example when the second mapping method is applied. In Table 3, one group includes 16 scrambling codes, and AP of the mobile station designates one group. The CA-ICH signatures of the CPCH belonging to each group are respectively mapped with the node $C_{2,0}$ or $C_{2,1}$ of 8 scrambling codes of a corresponding group.

In the aforementioned first to third mapping methods, the base station transmits either a maximum transmission rate of the CPCH that can be serviced through the CSICH, or availability of each data rate.

Particularly, in the fourth mapping method, the base station transmits group information of the CPCHs in addition to the maximum transmission rate or the availability of each data rate.

Now, a transmission structure of the CPCH to which the mapping methods according to the second embodiment are applied will be described.

The mobile station which desires to transmit packet data identifies a currently available(or non-available) channel referring to the CSICH broadcasting from the base station. At this time, after the mobile station identifies the available maximum transmission rate and group information of the CPCHs, the mobile station tries to access the base station when a CPCH that can support a desired transmission data rate is vacant.

At this time, the mobile station selects one AP signature and one access slot among 16 AP signatures and access slots and transmits an AP consisting of the selected AP signature and the access slot to the base station in compliance with a start point of the access slot.

As described above, the mobile station transmits the AP signature and the access slot to the base station in the access step, so as to inform the base station of a maximum data rate or a minimum spreading factor SF in the message part requested for data transmission.

Afterwards, the mobile station increases transmission power to retransmit the AP in compliance with the start point of the access slot when an acquisition response of the AP is not received until a constant time. Such retransmission is repeated until the number of threshold times.

The base station receives the AP from the mobile station to check a maximum data rate or a minimum spreading factor requested by the mobile station. Then, the base station determines whether to allocate a CPCH requested by the mobile station considering a resource of the current CPCH and an amount of total traffic. As a result, if the CPCH can be allocated, the base station transmits the signature equal to the received AP signature as an acknowledgement (ACK) signal in compliance with the start point of the access slot. If the CPCH cannot be allocated, the base station transmits an inverted signature of the received AP signature to the mobile station as a non-acknowledgement(NACK) in compliance with the start point of the access slot.

When a number of mobile stations simultaneously transmit the AP with the same signature to the base station, the base station does not identify the mobile stations from the same signature, thereby transmitting the ACK signal to all of the mobile stations. Thus, the mobile stations which received the ACK signal transmit a CD-P to the base station to reduce collision. In the same manner as the AP, any one of the 16 signatures is used as the CD-P.

When the base station receives one CD-P, the base station determines that collision has not occurred, and transmits the signature equal to that of the received CD-P to the mobile station through the CD-AICH. However, when the base station receives a number of CD-Ps, the base station determines that collision has occurred, and selects the CD-P having the highest power among the received CD-Ps to transmit the CD-AICH to a corresponding mobile station.

Furthermore, the base station transmits the CA-AICH containing CPCH information to be allocated in a signature format to a corresponding mobile station. At this time, the CA-AICH signature is mapped with the scrambling codes. A method for mapping the CA-AICH signature with the scrambling codes is performed by the aforementioned first to fourth mapping methods. The channel information contained in the CA-AICH includes a channelization code and a scrambling code of a down link-dedicated physical control channel (DL-DPCCH) and a physical common channel (PCPCH). The CD-AICH and the CA-AICH are simultaneously transmitted to the mobile station.

Afterwards, the mobile station which received the CD-AICH and the CA-AICH starts to transmit a message. The mobile station controls transmitting power using the PC-P if necessary to transmit the message. The base station transmits the DL-DPCCH to the mobile station. The mobile station transmits the message part with the physical channel allocated in accordance with the scrambling codes mapped with the CA-ICH signatures. One of the methods shown in Figs. 11a and 11b is used to select a channelization code of the data part and the control part in the message part.

**\*Third Embodiment**

In the third embodiment of the present invention, there is suggested a method for allocating a CPCH that can serve 16 or more CPCHs using a CD-P transmitted by the mobile station to detect and solve collision and a CA-AICH transmitted by the base station to allocate channels.

To this end, in the third embodiment of the present invention, the CD-P is mapped with the CA-ICH to indicate scrambling codes used to transmit the message part. Accordingly, the CD-P used in the third embodiment of the present invention serves to indicate the scrambling codes used to transmit the message part in addition to a function that detects and solves collision of the channels.

In the third embodiment of the present invention, two mapping methods are suggested.

First Mapping Method

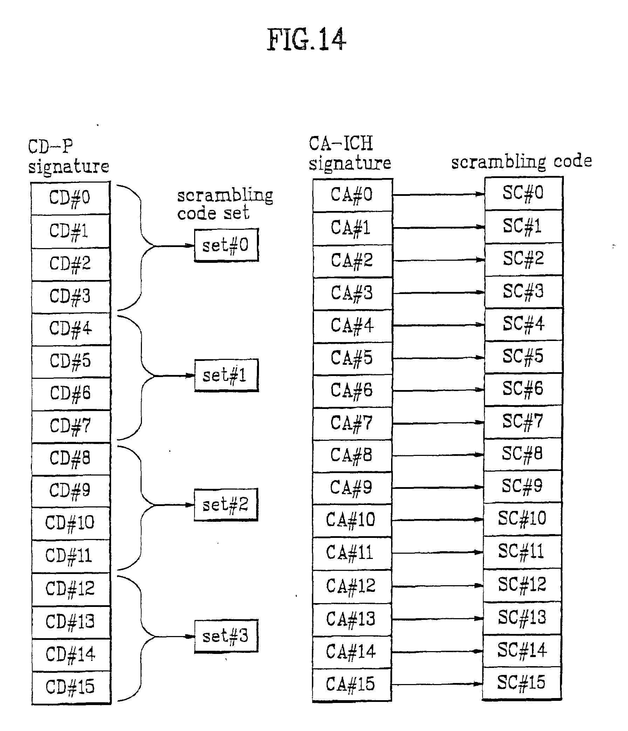

Fig. 14 shows an example of a first mapping method between a CD-P and a CA-ICH according to the third embodiment of the present invention.

Referring to Fig. 14, in the first mapping method of the third embodiment, the mobile station indicates a scrambling code set Set#j through the CD-P and indicates a scrambling code SC#j through the CA-ICH.

First, the mobile station selects one of 16 signatures CD#0 ~ CD#15 to detect collision of channels and transmits a CD-P with the selected signature to the base station.

At this time, the mobile station performs mapping so that the selected signature indicates a specific scrambling code set Set#j.

At this time, if the number of the scrambling code sets available in one cell is 4, CD#0 ~ CD#3 are mapped to indicate a scrambling code set Set#1, CD#8 ~ CD#11 are mapped to indicate a scrambling code set Set#2, and CD12 ~ CD#15 are mapped to indicate a scrambling code set Set#3. In this case, if the number of the scrambling code sets available in the cell is 16, 16 signatures are respectively mapped with 16 different scrambling code sets one to one.

As described above, the mobile station transmits the CD-P mapped to indicate a specific scrambling code set to the base station.

Then, the base station transmits the ACK signal to the mobile station through the CD-AICH if it is determined that no channel collision exists in the received CD-P and an available PCPCH exists therein. At the same time, the base station transmits the CA-AICH to the mobile station.

The base station selects one SC#k from a specific scrambling code set Set#j designated by the CD-P and maps the CA-AICH signatures with the selected scrambling code SC#k so that the CA-AICH indicates the selected scrambling code SC#k.

That is, since one scrambling code set Set#j includes 16 scrambling codes, 16 signatures of the CA-ICH are respectively mapped to indicate one scrambling code.

Afterwards, the mobile station which received the CD-AICH and the CA-AICH detects scrambling codes required to transmit the message through the CA-ICH and uses them when transmitting the message part.

Meanwhile, if the CPCHs are allocated by the above mapping method, it is possible to support 64 CPCHs when the number of scrambling code sets available in the cell is 4 while it is possible to support 256 CPCHs when the number of scrambling code sets is 16.

Second Mapping Method

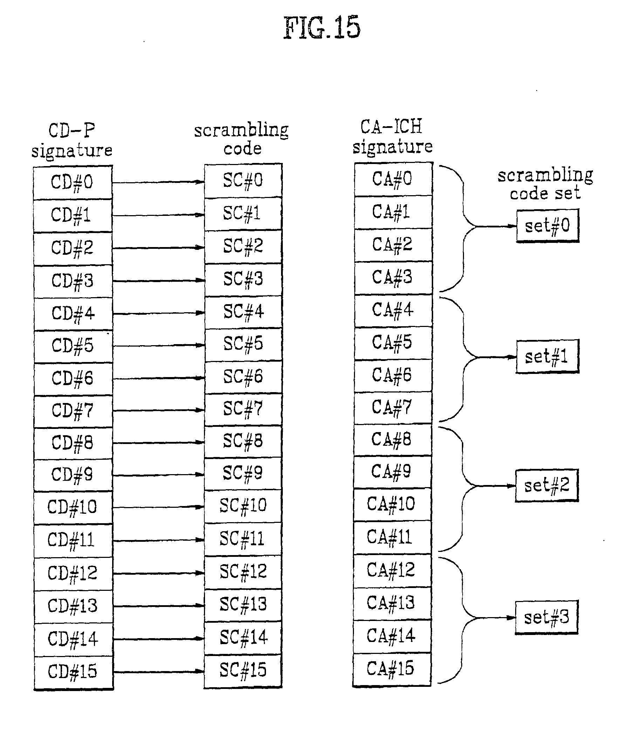

Fig. 15 shows another example of a mapping method between a CD-P and a CA-ICH according to the third embodiment of the present invention.

Referring to Fig. 15, in the second mapping method of the third embodiment, the mobile station indicates a scrambling code SC#k through the CD-P and indicates a scrambling code set Set#j through the CA-AICH.

First, the mobile station selects one of 16 signatures CD#0 ~ CD#15 to detect collision of channels and transmits a CD-P with the selected signature to the base station.

At this time, the mobile station performs mapping so that the selected signature indicates a specific scrambling code SC#k. 16 signatures of the CD-P are respectively mapped to indicate 16 different scrambling codes.

As described above, the mobile station transmits the CD-P mapped to indicate the specific scrambling code to the base station.

Then, the base station transmits the ACK signal to the mobile station through the CD-AICH if it is determined that no channel collision exists in the received CD-P and an available PCPCH exists therein. At the same time, the base station transmits the CA-AICH to the mobile station.

The base station selects a scrambling code set Set#j that can use a specific scrambling code SC#k designated by the CD-P and maps the CA-ICH signatures to indicate the selected scrambling code set Set#j by the CA-AICH.

If the number of available scrambling code sets is 4, the base station maps CA#0 ~ CA#3 to indicate a scrambling code set #0, CA#4 ~ CA#7 to indicate a scrambling code set #1, CA#8 ~ CA#11 to indicate a scrambling code set #2, and CA#12 ~ CA#15 to indicate a scrambling code set #3. In this case, if the number of the scrambling code sets available in one cell is 16, 16 signatures are respectively mapped with 16 different scrambling code sets one to one.

Afterwards, the mobile station which received the CD-AICH and the CA-AICH detects scrambling codes required to transmit the message part through the CA-AICH and uses them when transmitting the message part.

Meanwhile, if the CPCHs are allocated by the above mapping methods, it is possible to support 64 CPCHs when the number of scrambling code sets that can be used in the cell is 4 while it is possible to support 256 CPCHs when the number of scrambling code sets is 16.

In more detail, since the channelization code of the PCPCHs uses a node $C_{2,0}$ having a spreading factor of 2 in the OVSF code tree, one scrambling code is allocated to one PCPCH to allocate the whole PCPCHs.

At this time, if one scrambling code set includes 16 scrambling codes and 4 scrambling codes are used in one cell, maximum 64 PCPCHs can be used. That is, since the mobile station informs the base station of data rate through the AP in the access step, maximum 256 PCPCHs can be used using 16 CD-Ps and the CA-AICH.

Now, a transmission procedure of the CPCH according to the third embodiment will be described.

The mobile station which desires to transmit packet data through the CPCH identifies a currently available(or non-available) CPCH referring to the CSICH transmitted from the base station. After the mobile station identifies the available maximum transmission rate, the mobile station tries to access the base station with a desired transmission data rate when a CPCH that can support the desired transmission data rate is vacant.

At this time, the mobile station selects one AP signature and one access slot and transmits an AP consisting of the selected AP signature and the access slot to the base station in compliance with a start point of the access slot.

The mobile station transmits the AP signature and the access slot to the base station in the access step, so as to inform the base station of a maximum data rate or a minimum spreading factor SF in the message part required for data transmission.

Afterwards, the mobile station increases transmission power to retransmit the AP in compliance with the start point of the access slot when an acquisition response of the AP is not received until a constant time. Such retransmission is repeated until the number of threshold times.

The base station receives the AP from the mobile station to check a maximum data rate or a minimum spreading factor requested by the mobile station. Then, the base station determines whether to allocate a CPCH requested by the mobile station considering a resource of the current CPCH and an amount of total traffic. As a result, if a desired CPCH can be allocated, the base station transmits the signature equal to the received AP signature to the mobile station as an ACK signal in compliance with the start point of the access slot. If the desired CPCH cannot be allocated, the base station transmits an inverted signature of the received AP signature to the mobile station as a NACK signal in compliance with the start point of the access slot.

When a number of mobile stations simultaneously transmit the AP with the same signature to the base station, the base station does not identify the mobile stations from the same signature, thereby transmitting the ACK signal to all of the mobile stations. In this case, collision of the CPCHs occurs. Thus, the mobile stations which received the ACK signal transmit the CD-P to the base station to prevent such collision. At this time, the mobile station selects one of 16 signatures equal to 16 signatures of the AP to use it as the CD-P. Also, the mobile station maps a specific scrambling code set Set#j or a scrambling code SC#k to be used, with the signature of the selected CD-P and transmits it to the base station.

When the base station receives one CD-P, the base station determines that collision has not occurred, and transmits the signature equal to that of the received CD-P to the mobile station through the CD-AICH. However, when the base station receives a number of CD-Ps, the base station determines that collision has occurred, and selects the CD-P having the highest power among the received CD-Ps to transmit the CD-AICH to a corresponding mobile station.

Furthermore, the base station transmits the CA-AICH containing CPCH information to be allocated in a signature format to the mobile station. At this time, the base station maps the CA-AICH signature with the specific scrambling code SC#k or scrambling code set Set#j and transmits them to the mobile station.

If the CD-P signature indicates the specific scrambling code set Set#j, a scrambling code available in the designated scrambling code set Set#j is mapped with the CA-AICH signature. If the CD-P signature indicates the specific scrambling code SC#k, the scrambling code set Set#j that can use the designated scrambling code is mapped with the CA-AICH signature.

Afterwards, the mobile station which received the CD-AICH and the CA-AICH starts to transmit a message using the scrambling code designated by the CA-AICH. The mobile station controls transmitting power using the PC-P if necessary to transmit the message. The base station transmits the DL-DPCCH to the mobile station. The mobile station transmits the PC-P to the base station for a constant time of 0 or 8 slots before transmitting the message consisting of the data part and the control part in a physical channel format to the base station.

Meanwhile, in transmission of the PCPCH, the mobile station uses a node $C_{2,0}$ having a spreading factor of 2 on the OVSF code tree against all of the CA-AICHs as a channelization code.

In other words, the mobile station uses a node C(256, 0) as a channelization code of the control part in the message part of the PCPCH and a node $C_{SF, SF/4}$ variable depending on the spreading factor as a channelization code of the data part.

As aforementioned, the method for allocating a CPCH according to the embodiments of the present invention has the following advantages.

First, it is possible to use 16 or more CPCHs by allocating scrambling codes used to transmit the message part using the CD-P and the CA-AICH.

Second, it is possible to allocate maximum 256 physical CPCHs with one access preamble signature. Accordingly, it is possible to easily allocate the CPCHs in even case that a reverse access channel (RACH) and the AP signature are used in common.

Third, since the allocation probability of 256 physical CPCHs is equal, system performance is not reduced and it is possible to efficiently support low data rate service in the next generation mobile communication system.

Fourth, when considering 16 signatures of the CA-AICH support spreading factors of $4 \sim 256$, the CA-AICH is mapped with the scrambling code, so that other mobile stations can use other signatures of the CA-AICH without any interference while a specific mobile station transmits data at high transmission rate. Accordingly, it is possible to efficiently use channel resources.

Fifth, it is possible to allocate the channelization code of the message part in RACH or DPCH format.

Sixth, since the 16 AP signatures support spreading factors of $4 \sim 256$, it is possible to always select 16 AP signatures in even case that packet data are transmitted with any one of the spreading factors of $4 \sim 256$. Accordingly, it is possible to remarkably reduce the probability of collision of the CPCHs.

Seventh, while the specific mobile station transmits data at high data transmission rate having a spreading factor of 4, the other mobile stations can use other AP signatures. Accordingly, it is possible to efficiently use limited channel resources.

Finally, since the AP signatures are mapped with the scrambling codes regardless of the spreading factor of the transmission data, a mapping table is not required between the AP signatures and the scrambling codes. Accordingly, the system(or base station) does not require a broadcasting channel (BCH).

While the present invention has been described and illustrated herein with reference to the preferred embodiments thereof, it will be apparent to those skilled in the art that various modifications and variations can be made therein without departing from the spirit and scope of the invention. Thus, it is intended that the present invention covers the modifications and variations of this invention that come within the scope of the appended claims and their equivalents.

## Claims

1. A method for transmitting a message through common packet channel (CPCH) in a mobile station connected to a communication system comprising the steps of:

    Receiving status information of the CPCHs from the system;
    Selecting a CPCH from the status information;
    transmitting a signature to the system to request allocation of a CPCH, where the signature has one-to-one correspondence to each scrambling code for said CPCH;
    Receiving a channel allocation indicator from the system; and,
    transmitting a message to the system through at least one allocated CPCH.

2. The method of claim 1, where said each scrambling code for said CPCH has one-to-one correspondence to the access subchannel used by an access preamble part of said CPCH.

3. The method of claim 1, where said signature to request allocation of a CPCH is included in an access preamble part of said CPCH.

4. The method of claim 1, where said each scrambling code is used for scrambling each message part of said CPCH.

5. A method for allocating common packet channels (CPCH) comprising the steps of:

    transmitting status information of the CPCHs from a system to at least one mobile station;

detecting a desired CPCH from the status information and transmitting an access preamble (AP) with a signature from the mobile station to the system to request allocation of the desired CPCH, the signature mapping with at least one scrambling code;

transmitting a channel allocation indicator channel (CA-ICH) of at least one CPCH to be allocated from the system to the mobile station, the CA-ICH having a signature mapped with at least one scrambling code; and

transmitting a message from the mobile station to the system through at least one available physical channel using at least one scrambling code of the CA-ICH.

**6.** The method of claim 5, further comprising the steps of:

transmitting an ACK signal from the system to the mobile station to inform that the desired CPCH is available, before transmitting the CA-ICH;

transmitting a collision detection preamble (CD-P) with a signature from the mobile station to the system in response to the ACK signal, the signature mapping with at least one scrambling code; and

determining that collision has not occurred when receiving one CD-P only and transmitting a signature equal to that of the received CD-P to the mobile station through a collision detection acquisition indicator channel (CD-AICH) while determining that collision has occurred when receiving a number of Cd-Ps and transmitting a signature equal to that of the CD-P having the highest power among received CD-Ps from the system to the base station through the CD-AICH.

**7.** A method for allocating CPCHs comprising the steps of:

transmitting status information of the CPCHs from a system to a mobile station;

selecting at the mobile station a specific CPCH to be used in accordance with the status information and generating an AP which includes a signature indicative of the selected CPCH, a minimum spreading factor of the specific CPCH, and a maximum data rate, the signature mapping with scrambling codes having a channelization OVSF code tree in a message part of the specific CPCH, and a channelization code of a data part and a control part in the message part being selected in the code tree; and

transmitting the AP containing the signature from the system to the mobile station to request allocation of the specific CPCH.

**8.** The method of claim 7, wherein the mobile station maps signatures of the CPCHs that can be serviced by the system with different scrambling codes.

**9.** The method of claim 7, wherein the mobile station divides a specific scrambling code into chip codes of a predetermined length, and the signatures of the CPCHs are mapped with the divided scrambling chip codes.

**10.** The method of claim 7, wherein the mobile station selects one of codes located in an up branch from a node having a spreading factor of 2 in a code tree of the scrambling codes as a channelization code of the data part and selects a code last located among the codes of a down branch from the node having the spreading factor of 2 as a channelization code of the control part.

**11.** The method of claim 7, wherein the mobile station selects a code last located among codes in an up branch from a node having a spreading factor of 2 as a channelization code of the control part, selects a lower node of two nodes having a spreading factor of 4 from a node having a spreading factor of 2, and selects one of codes in the up branch from the selected lower node as a channelization code of the data part.

**12.** The method of claim 7, wherein the number of the scrambling codes mapped with the signature is 32/the minimum spreading factor.

**13.** A method for allocating CPCHs comprising the steps of:

transmitting status information of the CPCHs from a system to a mobile station;

selecting at the mobile station a desired CPCH in accordance with the status information and transmitting an AP, which includes a signature indicative of the selected CPCH, a minimum spreading factor of the CPCH, and a maximum data rate, to the system;

transmitting a CA-ICH of at least one CPCH to be allocated, from the system to the mobile station in accordance with the minimum spreading factor and the maximum data rate received from the mobile station, the CA-ICH having a signature mapped with at least one scrambling code having a channelization OVSF code tree in a message part of the CPCH; and

transmitting a message from the mobile station to the system using at least one corresponding physical channel in accordance with the CA-ICH, channelization codes of a data part and a control part in the message part being selected in the code tree.

14. The method of claim 13, wherein the system maps respective signatures of the CA-ICH with different scrambling codes.

15. The method of claim 13, wherein the system divides a specific scrambling code into chip codes of a predetermined length, and the respective signatures of the CA-ICH are mapped with the divided scrambling chip codes.

16. The method of claim 13, wherein the mobile station selects one of codes located in an up branch from a node having a spreading factor of 2 in a code tree of the scrambling codes as a channelization code of the data part and selects a code last located among codes of a down branch from the node having the spreading factor of 2 as a channelization code of the control part.

17. The method of claim 13, wherein the mobile station selects a code last located among codes in an up branch from a node having a spreading factor of 2 as a channelization code of the control part, selects a lower node of two nodes having a spreading factor of 4 from a node having a spreading factor of 2, and selects one of codes in the up branch from the selected lower node as a channelization code of the data part.

18. The method of claim 13, wherein the number of the scrambling codes mapped with the respective signatures of the CA-ICH is 32/the minimum spreading factor.

19. A method for allocating CPCHs comprising the steps of:

receiving group information of the CPCHs from a system to a mobile station;

transmitting an AP which indicates a group to be used and informs a desired transmission rate in accordance with the received group information from the mobile station to the system;

selecting at least one CPCH to be allocated in a group designated by the AP from the mobile station and transmitting a CA-ICH of the selected CPCH, the CA-ICH having a signature mapped with scrambling codes; and

transmitting a message from the mobile station to the system through at least one corresponding physical channel in accordance with the CA-ICH.

20. A method for allocating CPCHs comprising the steps of:

transmitting a maximum data rate and a minimum spreading factor of a desired channel from a mobile station to a system to request allocation of the channel;

transmitting a signal available for allocation of the requested channel from the system to the mobile station in response to the request;

mapping a CD-P for preventing channel collision by a specific scrambling code set and transmitting the CD-P from the mobile station to the system;

selecting a scrambling code from the scrambling code set designated by the CD-P transmitted from the mobile station and mapping the selected scrambling code by a CA-ICH to transmit the scrambling code to the mobile station; and

transmitting a message from the mobile station to the system using the scrambling code designated by the transmitted CA-ICH.

21. The method of claim 20, wherein signatures of the CD-P are mapped with the scrambling code sets one to one in accordance with the number of the scrambling code sets, or two signatures are mapped to indicate a specific scrambling code set.

22. A method for allocating CPCHs comprising the steps of:

transmitting a maximum data rate or a minimum spreading factor of a desired channel from a mobile station to a system to request allocation of the channel;

determining at the system whether allocation of the requested channel is available and responding to the mobile station;

mapping a CD-P for preventing channel collision with a specific scrambling code and transmitting the CD-P from the mobile station to the system;

selecting a scrambling code set that can use the scrambling code designated by the CD-P transmitted by the system to map with a CA-ICH and transmitting the scrambling code set to the mobile station; and

transmitting a message from the mobile station to the system using a scrambling code selected from the scrambling code set designated by the transmitted CA-ICH.

23. The method of claim 22, wherein each signature of the CA-ICH is mapped with one scrambling code set one to one in accordance with the number of available scrambling code sets, or a plurality of signatures are mapped to indicate a specific scrambling code set.

EP 1 122 964 A2

# FIG.1
# Related Art

AP–AICH    CD–AICH    DL–DPCCH

message part

AP    AP    CD–P

data  I

control  Q

power control
preamble

# FIG.2
# Related Art

# FIG.3
# Related Art

data part(C$_d$)

CH#i

SF=16

SF=32

SF=64

SF=128

control part(C$_c$)

SF=256

# FIG.4
# Related Art

# FIG.5
# Related Art

data part($C_d$)

CH#i

SF=4,8,16

control part($C_c$)

SF=256

# FIG.6
## Related Art

# FIG. 7A

data part
$(C_{SF,0}$ or $C_{SF,SF/2})$

SF=256

SF=8

SF=4

SC#i
$(C_{2,0}$ or $C_{2,1})$

SF=2

control part$(C_{256,127}$ or $C_{256,255})$

# FIG. 7B

control part$(C_{256,0}$ or $C_{256,128})$

SF=256

SC#i
$(C_{2,0}$ or $C_{2,1})$

SF=2

SF=4

SF=8

data part
$(C_{SF,SF/4}$ or $C_{SF,3*SF/4})$

# FIG.8

# FIG.9

## FIG.10

# FIG.11A

data part
$(C_{SF,0}$ or $C_{SF,SF/2})$

SF=256

SF=8

SF=4

SC#i
$(C_{2,0}$ or $C_{2,1})$

SF=2

control part$(C_{256,127}$ or $C_{256,255})$

# FIG.11B

control part$(C_{256,0}$ or $C_{256,128})$

SC#i
$(C_{2,0}$ or $C_{2,1})$

SF=256

SF=8

SF=4

SF=2

data part
$(C_{SF,SF/4}$ or $C_{SF,3*SF/4})$

# FIG.12

# FIG.13

message part
scrambling code

| CA-ICH signature | | | | |
|---|---|---|---|---|
| SF=1 | SF=2 | SF=4 | SF=8 | SF=16 |

CA#0
CA#1
CA#2
CA#3
CA#4
CA#5
CA#6
CA#7
CA#8
CA#9
CA#10
CA#11
CA#12
CA#13
CA#14
CA#15

| |
|---|
| A-P 4096chips |
| CD-P 4096chips |
| SC#0 38400chips |
| SC#1 38400chips |
| SC#2 38400chips |
| SC#3 38400chips |
| SC#4 38400chips |
| SC#5 38400chips |
| SC#6 38400chips |
| SC#7 38400chips |
| SC#8 38400chips |
| SC#9 38400chips |
| SC#10 38400chips |
| SC#11 38400chips |
| SC#12 38400chips |
| SC#13 38400chips |
| SC#14 38400chips |
| SC#15 38400chips |
| non-available part |

# FIG.14

CD-P
signature

| CD#0 |
| CD#1 |
| CD#2 |
| CD#3 |
| CD#4 |
| CD#5 |
| CD#6 |
| CD#7 |
| CD#8 |
| CD#9 |
| CD#10 |
| CD#11 |
| CD#12 |
| CD#13 |
| CD#14 |
| CD#15 |

scrambling
code set

| set#0 |
| set#1 |
| set#2 |
| set#3 |

CA-ICH
signature

| CA#0 |
| CA#1 |
| CA#2 |
| CA#3 |
| CA#4 |
| CA#5 |
| CA#6 |
| CA#7 |
| CA#8 |
| CA#9 |
| CA#10 |
| CA#11 |
| CA#12 |
| CA#13 |
| CA#14 |
| CA#15 |

scrambling code

| SC#0 |
| SC#1 |
| SC#2 |
| SC#3 |
| SC#4 |
| SC#5 |
| SC#6 |
| SC#7 |
| SC#8 |
| SC#9 |
| SC#10 |
| SC#11 |
| SC#12 |
| SC#13 |
| SC#14 |
| SC#15 |

# FIG.15

| CD–P signature | | scrambling code | | CA–ICH signature | | scrambling code set |
|---|---|---|---|---|---|---|
| CD#0 | → | SC#0 | | CA#0 | | |
| CD#1 | → | SC#1 | | CA#1 | | set#0 |
| CD#2 | → | SC#2 | | CA#2 | | |
| CD#3 | → | SC#3 | | CA#3 | | |
| CD#4 | → | SC#4 | | CA#4 | | |
| CD#5 | → | SC#5 | | CA#5 | | set#1 |
| CD#6 | → | SC#6 | | CA#6 | | |
| CD#7 | → | SC#7 | | CA#7 | | |
| CD#8 | → | SC#8 | | CA#8 | | |
| CD#9 | → | SC#9 | | CA#9 | | set#2 |
| CD#10 | → | SC#10 | | CA#10 | | |
| CD#11 | → | SC#11 | | CA#11 | | |
| CD#12 | → | SC#12 | | CA#12 | | |
| CD#13 | → | SC#13 | | CA#13 | | set#3 |
| CD#14 | → | SC#14 | | CA#14 | | |
| CD#15 | → | SC#15 | | CA#15 | | |